# NEUE EUROPÄISCHE PATENTSCHRIFT

(11) **EP 0 302 339 B2**
(45) Veröffentlichungstag und Bekanntmachung des Hinweises auf die Entscheidung über den Einspruch: **10.09.1997**
(45) Hinweis auf die Patenterteilung: 29.09.1993
(21) Anmeldenummer: 88111935.8
(22) Anmeldetag: 25.07.1988
(51) Int. Cl.: B65D 65/40, B32B 27/32

(54) **Siegelbare Mehrschichtfolie mit verbesserter Transparenz**
Sealable sandwich film with improved transparency
Feuille à plusieurs couches scellable avec translucidité améliorée

(30) Priorität: 07.08.1987 DE 3726265
(43) Veröffentlichungstag der Anmeldung: 08.02.1989
(73) Patentinhaber: Wolff Walsrode Aktiengesellschaft, D-29655 Walsrode (DE)
(72) Erfinder: Schinkel, Ingo, Dipl.-Ing., D-3030 Walsrode 1 (DE); Böhner, Jürgen, Dipl.-Ing., D-3036 Bomlitz (DE)
(74) Vertreter: Zobel, Manfred, Dr.

(56) Entgegenhaltungen:
- EP-A- 0 184 094
- EP-A- 0 213 698
- EP-A- 0 217 598
- EP-A- 0 255 622
- EP-B- 0 114 312
- DE-A- 3 247 998
- DE-A- 3 331 983
- GB-A- 2 055 688
- Norwegische Patentanmeldung Nr. 87/2814

## Beschreibung

Die vorliegende Erfindung betrifft Verpackungen aus Mehrschichtfolien, wobei als Mehrschichtfolien solche verwendet werden, die nur eine Heißsiegelschicht, vorzugsweise auf Basis spezieller Olefinpolymerisate, aufweisen.

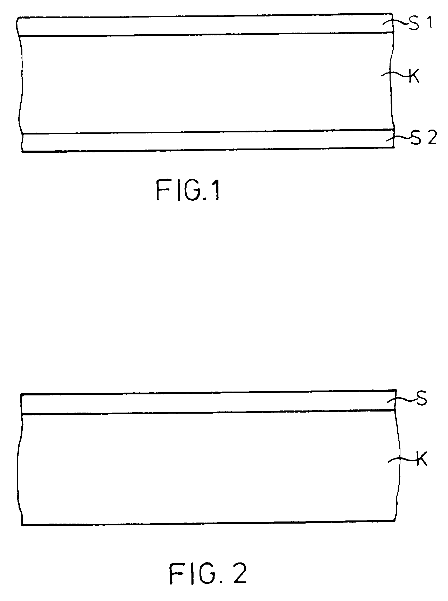

Verpackungen, vorzugsweise Einschlagverpackungen aus siegelbaren olefinischen Mehrschichtfolien, sind seit langem bekannt. Verwiesen wird auf EP-A-27 586, US-A-4 348 457, DE-A-31 14 171, US-A-4 400 428, DE-A-35 17 082, DE-A-35 43 118 und DE-A-32 47 998. Im praktischen Gebrauch wird als unabdingbare Voraussetzung zur Erzielung einer ausreichenden Festigkeit aller Versiegelungen der Verpackung der Einsatz einer Mehrschichtfolie angesehen, deren Basisschicht K auf beiden Oberflächen S1 und S2 eine Heißsiegelschicht trägt (vgl. Fig. 1). Nur so konnte bei diesen Verpackungen das notwendige Versiegeln der beiden Oberflächenschichten gegeneinander erreicht werden. Dementsprechend wurden daher auch bei der Herstellung von Einschlagverpackungen aus z.B. gereckten Mehrschichtfolien mit einer Basisschicht aus zunächst nicht siegelbaren Polypropylen und Heißsiegelschichten aus Polybuten-1 bzw. Co-und/oder Terpolymeren von Buten-1 wie z.B. Mischungen aus Ethylen/Propylen/Buten-1-Terpolymeren und/oder Propylen/Buten-1-Copolymeren nur solche Mehrschichtfolien verwendet, deren Basisschicht auf beiden Oberflächen Schichten aus dem genannten Heißsiegelmaterial trägt.

Da die bekannten Verpackungen unter Einsatz von Mehrschichtfolien mit je einer heißsiegelbaren Schicht auf den Oberflächen der Basisschicht in ihren optischen Eigenschaften und Gebrauchseigenschaften außerdem nicht allen Anforderungen genügen, war es Aufgabe der älteren Anmeldung gemäß EP-A 255 622 und der Vorliegenden Erfindung, Verpackungen der genannten Art zur Verfügung zu stellen, die insbesondere bezüglich ihrer optischen Eigenschaften eine deutliche Verbesserung gegenüber den bekannten Verpackungen aufweisen. Aufgabe der Vorliegenden Erfindung war es, insbesondere das Verbindungsverhalten zwischen Siegel- und Kernschicht weiter zu verbessern.

Gegenstand der vorliegenden Erfindung sind

Verpackungen aus mindestens monoaxial, Vorzugsweise biaxial gereckten Mehrschichtfolien, die eine Kernschicht K und eine Siegelschicht S aufweisen, dadurch gekennzeichnet, daß die Versiegelung nur durch Versiegelung der Oberflächen S gegen K und S gegen S erfolgt und daß man als Mehrschichtfolien solche Mehrschichtfolien verwendet, die eine Basisschicht aus Polypropylen aufweisen, von der nur eine Oberfläche eine heißsiegelbare Außenschicht aus
1. mehr als 70 Gew.-% Olefinpolymerisaten aus
   A) wenigstens einem Copolymerisat, vorzugsweise einem Terpolymeren enthaltend insgesamt an polymerisierten Einheiten
      a) 65 bis 82 Gew.-% Propylen
      b) 25 bis 14 Gew.-% Buten-1
      c) 10 bis 4 Gew.-% Ethylen und
   B) 0 bis 7 Gew.-% eines Copolymeren aus Ethylen und Buten-1
   wobei die Summe aus A) und B) bzw. aus a, b, c immer 100 Gew.-% und der Gehalt an polymerisierten Monomeren Komponanten A) und B) immer 65 bis 82 Gew.-% Propylen, 25 bis 14 Gew.-% Buten-1 und 10 bis 4 Gew.-% Ethylen ergeben muß, und
2. weniger als 30 Gew.-% eines Propylen/Ethylen-Copolymeren mit 2 bis 6 Gew.-%, vorzugsweise 3 bis 5 Gew.-% polymerisierten Ethylen, wobei die Summe aus 1. und 2. immer 100 % ergeben muß, und
3. gegebenenfalls üblichen Hilfs- und Zusatzstoffen, trägt.

Ein weiterer Gegenstand der vorliegenden Erfindung ist ein Verfahren zur Herstellung der Verpackung in der genannten Art, das dadurch gekennzeichnet ist, daß man die genannten Mehrschichtfolien, die nur eine Heißsiegelschicht aufweisen, einsetzt und die notwendigen Versiegelungen durch Heißsiegeln der heißsiegelbaren Außenschicht gegen die unbelegte Oberfläche der Polypropylenbasisschicht und durch Heißsiegeln der Siegelschicht gegen sich selbst ausführt.

Für den Fachmann war es völlig überraschend daß es durch den Einsatz von Mehrschichtfolien, die nur eine heißsiegelbare Schicht aufweisen, gelingt, die heißsiegelbare Schicht gegen die unbelegte Oberfläche der Polypropylenbasisschicht mit ausreichender Festigkeit zu siegeln, um so eine gebrauchsfähige Verpakkung herzustellen. Zusätzlich weisen die Einschlagverpackungen von z.B. Zigarettenpäckchen einen strafferen Einschlag als diejenigen aus Mehrschichtfolien mit heißsiegelbaren Schichten auf beiden Oberflächen der Basisschicht auf und besitzen wesentlich bessere optische Eigenschaften und eine höhere Steifigkeit. Diese verbesserten optischen Eigenschaften weisen auch andere erfindungsgemäße Verpackungen wie z.B. Schlauchbeutelverpackungen auf, deren Kratzfestigkeit zusätzlich noch bedeutend verbessert ist.

Die für die Herstellung der erfindungsgemäßen Verpackungen verwendeten Mehrschichtfolien haben vorzugsweise folgenden Aufbau:
Die Basisschicht besteht vorzugsweise aus einem Polypropylen. Vorzugsweise wird ein isotaktisches Polypropylen mit einer Dichte von 0,9 bis 0,91 g/cm³ und einem Schmelzflußindex von 1 bis 4 g/10 Minuten bei 230°C/21,2 N (nach DIN 53 735) verwendet. Die Basisschicht kann bis zu 10 Gew.-% eines mit dem Polypropylen verträglichen Kohlenwasserstoffharzes mit einem Molekulargewicht von 500 bis 1500 und einem Schmelzpunkt von kleiner 100°C oder bis zu 10 Gew.-% des Olefinpolymerisates (A) der Heißsiegelschicht einthalten.

Die Olefinpolymerisate (A) der Heißsiegelsschicht, die sich vorzugsweise aus einem Propylen/Buten-1/Ethylenterpolymeren und gegebenenfalls einem Ethylen/Buten-1-Copolymeren zusammensetzen, sollten vorzugsweise einen Schmelzflußindex von 0,1 bis 16 g/10 Minuten bei 230°C und 21,2 N (DIN 53 735), besonders bevorzugt von 4 bis 10 g/10 Minuten bei 230°C und 21,2 N aufweisen. Die Herstellung der statistischen Terpolymeren und der statistischen Copolymeren ist Stand der Technik und wird z.B. in der Japanischen Offenlegungsschrift JA-OS 35 487/1974 beschrieben.

Die Komponente 2 des Heißsiegelmaterials ist ein Propylen/Ethylen-Copolymeres, das vorzugsweise einen Schmelzindex (gemessen nach DIN 53 735) von 0,1 bis 25, bevorzugt zwischen 3 bis 10 g/10 min. bei 230°C und 21,2 N aufweist. Die Herstellung solcher statistischer Copolymerer ist dem Fachmann bekannt und sie sind als Handelssprodukte erhältlich.

Eine Ausrüstung der für die Herstellung der erfindungsgemäßen Verpackungen verwendeten Mehrschichtfolien mit üblichen Additiven und Hilfsmitteln, wie z.B. Gleitmitteln, Antiblockmitteln und Antistatika in üblichen Mengen, ist möglich.

Die erfindungsgemäßen Mehrschichtfolien können außerdem eine Gassperrschicht, vorzugsweise eine Sauerstoffsperrschicht aus einem verseiften Ethylen/Vinylacetat-Copolymerisat mit 40 bis 85 Mol-% Vinylacetateinheiten, die zu mindestens zu 90 Gew.-%, vorzugsweise zu mehr als 96 Gew.-%, verseift sind, und gegebenenfalls übliche Haftvermittlerschichten enthalten.

Die für die Herstellung der erfindungsgemäßen Verpackung verwendeten Mehrschichtfolien können nach üblichen Verfahren wie Laminierung, Beschichtung oder Schmelz(co)extrusion produziert werden, wobei das Heißsiegelschichtmaterial vorzugsweise durch direkte Kompoundierung hergestellt werden kann. Die Mehrschichtfolien werden vorzugsweise mindestens monoaxial, bevorzugt biaxial gereckt. Dabei wird die Längsreckung vorzugsweise im Verhältnis 5:1 bis 7:1 und die Querreckung im Verhältnis 7:1 bis 10:1 vorgenommen.

In den für die Herstellung der erfindungsgemäßen Verpackung verwendeten Mehrschichtfolien sollte die Polypropylenbasisfolie vorzugsweise eine Dicke von 20 bis 50 µm und die heißsiegelbare Schicht vorzugsweise eine Dicke von 0,8 bis 2 µm, besonders bevorzugt um 1µm, aufweisen.

Erfindungsgemäße Verpackungen sind insbesondere Einschlagverpackungen, vorzugsweise für Zigarettenpäckchen und Schlauchbeutelpackungen mit überlappender Rückennaht.

Bei der Herstellung von Einschlagverpackungen für Zigarettenpäckchen sollte die Siegelschicht bei der verwendeten Zweischichtfolie auf der Päckchenaußenseite, bei der Herstellung von Schlauchbeutelverpackungen auf der Beutelinnenseite liegen.

In den nachfolgenden Beispielen werden folgende Prüfungsmethoden und Verfahren zur Bestimmung der Werte und Eigenschaften verwendet:

Die Trübung wurde durch ASTM D 1003-52 bestimmt.

Die Herstellung von Siegelnähten erfolgt mittels Niederdrucksiegelung. Das verwendete Siegelgerät hat einseitig beheizte, glatte Siegelbacken und siegelt mit einem Druck von 0,35 N/cm² bei einer eingestellten Siegelzeit von 0,5 sec.

Unter Siegelfestigkeit wird die Kraft verstanden, die notwendig ist, um eine bei angegebener Siegeltemperatur hergestellte Siegelnaht zu trennen. Die Siegelfestigkit wird in N angegeben und auf einen 15 mm breiten Prüfstreifen bezogen. Bei über 1 N ist eine ausreichend feste Versiegelung erzielt.

Zur Bestimmung der Kratzfestigkeit wird die Trübung, wie bereits angegeben, einer Folie vor und nach dem Verkratzen gemessen. Das Verkratzen erfolgt mit Hilfe von 40 g staubfreiem Siliciumcarbid, das auf eine um 45° gegen die Horizontale geneigte Folie gestreut wird.

### Beispiel 1

Als Heißsiegelmaterial der zur Herstellung der erfindungsgemäßen Verpackungen verwendeten Folie werden 58 Gew.-% Propylen/Ethylen-Copolymerisat mit 42 Gew.-% eines statistischen Terpolymerisats aus 71 Gew.-% Propylen-, 20 Gew.-% Buten-1- und 9 Gew.-% Ethylen-Einheiten mit einem Schmelzindex von 7 g/10 Minuten bei 230°C/21,2 N, mit 2,5 Gew.-% Erucasäureamid, 0,15 Gew.-% eines thermoplastischen Polyamid-12 als Abstandshalter, und 0,5 Gew.-% N,N-Bis-(2-hydroxyethyl)-(C₁₂ bis C₁₆)-alkylamin vermischt und nach üblichen Verfahren mit der Basisfolie aus Polypropylen der Dichte 0,905 g/cm³ und dem Schmelzindex von 3,3 g/10 Minuten bei 230°C/21,2 N verbunden und verstreckt, so daß eine Verbundfolie mit einer Längsreckung im Verhältnis 5:1 und einer Querreckung im Verhältnis 10:1 erhalten wird, wobei die Basisfolie eine Dicke von 20µm und die auf einer Oberfläche der Basisschicht befindliche Siegelschicht eine Dicke von 1 µm aufweist.

Der erfindungsgemäße Aufbau ist beispielhaft in Fig. 2 wiedergegeben, worin K die Polypropylenbasisschicht darstellt und S die nur einseitig aufgetragene Siegel-Schicht.

### Vergleichsbeispiel

Es wurde eine Folie gemäß Beispiel 2 der DE-A-29 41 909 nachgearbeitet.

Die Prüfungen der erfindungsgemäßen Folie und der Vergleichsfolie sind in folgender Tabelle wiedergegeben;

**Tabelle**

| | Beispiel 1 | | Vergleichsbeispiel 1 | |
|---|---|---|---|---|
| Trübung (I) der Gesamtfolie | 0,9 | | 2,0 | |
| Kratzfestigkeit, Seite: | S: 0,8/22,7 | K: 0,9/6,8 | S1 oder S2: 1,4/24,1 | |
| Siegelung | S | S | S1 | S1 |
| | gegen S | gegen K | gegen S1 | S2 |
| ausreichend feste Versiegelung bei °C: | 90 | 125 | 125 | 125 |

## Patentansprüche

1. Verpackungen aus mindestens monoaxial, vorzugsweise biaxial gereckten Mehrschichtfolien, die eine Kernschicht K und eine Siegelschicht S aufweisen, dadurch gekennzeichnet, daß die Versiegelung nur durch Versiegelung der Oberflächen S gegen K und S gegen S erfolgt und daß man als Mehrschichtfolien solche Mehrschichtfolien verwendet, die eine Basisschicht aus Polypropylen aufweisen, von der nur eine Oberfläche eine heißsiegelbare Außenschicht aus
1. mehr als 70 Gew.-% Olefinpolymerisaten aus
A) wenigstens einem Copolymerisat, vorzugsweise einem Terpolymeren enthaltend insgesamt an polymerisierten Einheiten
a) 65 bis 82 Gew.-% Propylen
b) 25 bis 14 Gew.-% Buten-1
c) 10 bis 4 Gew.-% Ethylen und
B) 0 bis 7 Gew.-% eines Copolymeren aus Ethylen und Buten-1
wobei die Summe aus A) und B) bzw. aus a, b, c immer 100 Gew.-% und der Gehalt an polymerisierten Monomeren Komponanten A) und B) immer 65 bis 82 Gew.-% Propylen, 25 bis 14 Gew.-% Buten-1 und 10 bis 4 Gew.-% Ethylen ergeben muß, und
2. weniger als 30 Gew.-% eines Propylen/Ethylen-Copolymeren mit 2 bis 6 Gew.-%, vorzugsweise 3 bis 5 Gew.-% polymerisierten Ethylen, wobei die Summe aus 1. und 2. immer 100 % ergeben muß, und
3. gegebenenfalls üblichen Hilfs- und Zusatzstoffen, trägt.

2. Verpackungen gemäß Anspruch 1, dadurch gekennzeichnet, daß es Zigarettenpäckchen oder Schlauchbeutelverpackungen sind.

3. Verfahren zur Herstellung von Verpackungen nach Anspruch 1 oder 2, dadurch gekennzeichnet, daß man die Mehrschichtfolien nach Anspruch 1 verwendet und die notwendigen Versiegelungen durch Heißsiegeln der heißsiegelbaren Außenschicht S der Mehrschichtfolie gegen die unbelegte Oberfläche der Polypropylenbasisschicht K und durch Heißsiegeln der Siegelschicht S gegen sich selbst ausführt.

## Claims

1. Packaging materials of multilayered films which are stretched at least monoaxially, preferably biaxially and comprise a core layer K and a sealing layer S, characterised in that the seal is obtained only by sealing the surfaces S against K and S against S and in that the multilayered films used are films having a basic layer of polypropylene, only one surface of which carries a heat-sealable outer layer of
1. more than 70 wt.% of olefine polymers of
A) at least one copolymer, preferably a terpolymer containing a total of polymerised units of
a) 65 to 82 wt.% of propylene,
b) 25 to 14 wt.% of 1-butene and
c) 10 to 4 wt.% of ethylene, and
B) 0 to 7 wt.% of a copolymer of ethylene and 1-butene,
the sum of A) and B) and the sum of a), b) and c) always amounting to 100 wt.% and the content of polymerised monomers in components A) and B) always adding up to 65 to 82 wt.% of propylene, 25 to 14 wt.% of 1-butene and 10 to 4 wt.% of ethylene, and
2. less than 30 wt.% of a propylene/ethylene copolymer containing 2 to 6 wt.%, preferably 3 to 5 wt.% of polymerised ethylene, the sum of 1. and 2. always amounting to 100 wt.%, and
3. optionally conventional auxiliary agents and additives.

2. Packaging materials according to claim 1, characterised in that they are cigarette packets or tubular bag packages.

3. Process for the production of packaging materials according to claim 1 or 2, characterised in that the multilayered films according to claim 1 are used and the necessary seals are obtained by heat-sealing the heat-sealable outer layer S of the multilayered film against the bare surface of the basic polypropylene layer K and by heat-sealing the sealing layer S against itself.

## Revendications

1. Emballages composés de feuilles à plusieurs couches étirées au moins monoaxialement, de préférence biaxialement qui présentent une couche de base K et une couche thermosoudable S, caractérisés en ce que la cohésion est assurée uniquement par le soudage des surfaces S et K et S et S et en ce que les feuilles a plusieurs couches utilisées présentent une couche de base en polypropylène, dont une seule des faces présente une couche externe thermosoudable en
1. plus de 70% en poids de polymères oléfiniques composés de
A) au moins un copolymère, de préférence un terpolymère contenant au total en unités polymérisées
a) 65 à 82% en poids de propylène
b) 25 à 14% en poids de butène-1
c) 10 à 4% en poids d'éthylène et
B) 0 à 7% en poids d'un copolymère d'éthylène et de butène-1,
la somme de A) et B) ou de a), b), c) totalisant toujours 100% en poids et la teneur en monomères polymérisés des composantes A) et B) étant toujours de 65 a 82% en poids de propylène, 25 a 14% en poids de butène-1 et 10 à 4% en poids d'éthylène et
2. moins de 30% en poids d'un copolymère propylène/éthylène avec 2 à 6% en poids, de préférence 3 à 5% en poids d'éthylène polymérisé, la somme de 1. et 2. devant toujours être égale à 100% et
3. éventuellement des adjuvants et additifs habituels.

2. Emballages selon la revendication caractérisés en ce qu'il s'agit de paquets de cigarettes ou de gaines d'emballage.

3. Procédé de fabrication d'emballages selon la revendication 1 ou 2, caractérisé en ce que des feuilles à plusieurs couches selon la revendication 1 sont utilisées et les soudures nécessaires sont exécutées par thermosoudage de la couche externe thermosoudable S de la feuille à plusieurs couches contre la face non enduite de la couche de base K en polypropylène et par thermosoudage de la couche soudable S contre elle-même.
